# EUROPEAN PATENT SPECIFICATION

(11) **EP 3 600 606 B1**
(45) Date of publication and mention of the grant of the patent: **03.03.2021**
(21) Application number: 18715120.4
(22) Date of filing: 28.03.2018
(51) Int. Cl.: B01D 53/047, B01D 53/04, F16K 3/26, F16K 3/34

(54) **A PRESSURE SWING ADSORPTION SYSTEM WITH A VARIABLE FLOW RESTRICTOR**
DRUCKWECHSELADSORPTIONSSYSTEM MIT VARIABLEM DURCHFLUSSBEGRENZER
SYSTÈME D'ADSORPTION MODULÉE EN PRESSION À LIMITEUR D'ÉCOULEMENT VARIABLE

(30) Priority: 30.03.2017 GB 201705122; 30.03.2017 GB 201705123
(43) Date of publication of application: 05.02.2020
(73) Proprietor: Parker Hannifin Manufacturing Limited, Hemel Hempstead, Hertfordshire HP2 4SJ (GB)
(72) Inventor: GRAHAM, Michael, Cramlington Northumberland NE23 3YT (GB)
(74) Representative: Orr, Robert
(86) International application number: PCT/GB2018/050814
(87) International publication number: WO 2018/178663

(56) References cited:
- US-A- 4 231 768
- US-A- 4 631 073
- US-A- 5 490 871
- US-A- 5 871 564
- US-A1- 2008 047 426
- US-B1- 6 217 635

## Description

The invention relates to a pressure swing adsorption system which includes a variable flow restrictor for controlling the volume of fluid which can flow through a purge conduit from an online chamber to a chamber in which an adsorption medium is being regenerated.

Pressure swing adsorption systems are used to treat a fluid such as a gas or a liquid by removing a component from the fluid. Such systems include first and second chambers, each containing an adsorption medium, in which a fluid can be directed to flow over the adsorption medium in one of the chambers while the adsorption medium in the other of the chambers is regenerated by desorption of adsorbed contaminants. The chambers of a pressure swing adsorption system are frequently referred to as columns. They are often elongate with an identifiable axis. Columns which are not necessarily elongate, or which do not have an identifiable axis might be used.

The chambers of a pressure swing adsorption system are switched between online and regeneration modes when the ability of the adsorption medium in the online chamber to adsorb more contaminants is reduced below a threshold. A small portion of the fluid which has passed over the adsorption medium in the online chamber is supplied to the regenerating chamber through a purge conduit or line to cause contaminants which have been adsorbed by the adsorption medium to be desorbed.

EP-A-2955423 discloses a flow control device which can be used in a pressure swing adsorption system to control the flow of a purge stream from an online chamber to a chamber in which an adsorption medium is being regenerated. The flow control device has a first plate with a series of orifices formed in it, the orifices having a range of different sizes, and a second plate which has an orifice formed in it. The first and second plates are mounted coaxially, and the rotational orientation of the first plate relative to the second plate can be selected so that the orifice in the second plate is aligned with a selected one of the orifices in the first plate. The orifice in the first plate is selected to provide a flow rate through the device which is appropriate to meet the requirements of a pressure swing adsorption system in which the device is to be used. The flow control device must be disassembled in order to change flow rate that is possible through the device by changing the orifice in the first plate which is aligned with the orifice in the second plate.

US Patent no. US-5490871A discloses a PSA plant for the production of oxygen from air, which includes an air feed line. The air feed line can be placed in communication with one of two vessels each containing beds of a zeolite molecular sieve adsorbent. Valves are operable to place the bottoms of the vessels in communication with the air feed line or to deny such communication. The plant includes an outlet pipe for oxygen rich product gas in which is located a further valve. Other valves are operable to place the top of the vessels in communication with or to deny communication with the pipeline. The plant also includes an outlet pipeline for waste and purge gases. A pipeline connects together the upper ends of the vessels and a valve controls the flow of gas between the vessels through the pipeline. Whilst the zeolite in one of the vessels is on an adsorption step the zeolite in the other vessel is undergoing a desorption step. Residual unadsorbed gas is vented and adsorbed gas, mainly nitrogen, is desorbed and also vented. During this step a continuous controlled purge flows through a valve such that oxygen rich product gas flows from vessel, through the pipeline and open valve and hence into the upper end of vessel.

US Patent no. US-4231768A discloses an air purification system comprising an adsorbent or desiccant dryer. The dryer employs a pair of desiccant beds, disposed in appropriate vessels, which are connected to lines for reception of influent gas to be dried, and delivery of effluent dried gas. A metering or throttling valve diverts a portion of the dried effluent gas as purge in a counter-flow through the bed being regenerated.

US Patent no. US-5871564A discloses a pressure swing adsorption apparatus for varying the concentration of at least one constituent of a gaseous mixture by sending a gaseous mixture into an adsorber to generate a particular product gas while delivering to another adsorber both a predetermined portion of the product gas to purge the other adsorber of its adsorbed gas and a selected amount of the product gas, independent of the flow rate and in addition to the predetermined portion, to produce a desired relative concentration of the constituents of the product gas from a range of relative concentrations. The apparatus has a valve in a purge loop that independently controls the adsorber to produce a desired concentration of the product gas from a range of available concentrations.

US Patent Publication no. US-2008/047426A1 discloses an adsorption system for separating air into a concentrated gas component, which has an air supply, a compressor for receiving and compressing the air supply, providing a compressed air supply, and molecular sieve material for separating the compressed air supply into a concentrated gas component. An output quantity of the concentrated gas is delivered by the adsorption system and a purging quantity of the concentrated gas is dispensed into a sieve chamber of the adsorption system undergoing a purge cycle. A purge control device connects the two outputs of a first sieve chamber and a second sieve chamber. The purge control device can be a passive orifice of a fixed diameter restriction or an active valve capable of being controlled by a logic control device.

The invention provides a pressure swing adsorption system in which a variable flow restrictor in the conduit for the purge fluid has first and second valve members which are capable of relative sliding movement. The first valve member has an opening in it which is progressively occluded when one of the valve members slides relative to the other valve member, where the shape of the opening is such that the rate at which the size of the opening changes when the opening is nearly closed is much smaller than the rate at which the size of the opening changes when the opening is nearly fully open.

The invention therefore provides a pressure swing adsorption system which includes first and second chambers, each containing an adsorption medium, in which when the system is in use a fluid is directed to flow over the adsorption medium in one of the chambers in order to adsorb contaminants in the fluid while the adsorption medium in the other of the chambers is regenerated by desorption of adsorbed contaminants, the system including a purge conduit which extends between the first and second chambers for delivering fluid when the system is in use from the chamber to which fluid is supplied for adsorption of contaminants to the chamber which is being regenerated, and in which the system includes a variable flow restrictor for controlling the volume of fluid which can flow through the purge conduit when the system is in use, the flow restrictor comprising:
a. a first valve member which has an opening in its wall,
b. a second valve member which is in sliding contact with the first valve member so that the opening in the wall of the first valve member is progressively occluded when one of the valve members slides relative to the other of the valve members,
c. a drive mechanism for controlling the relative positions of the first and second valve members between a first limiting position in which the effective open size of the opening in the first valve member is at a minimum and a second limiting position in which the size of the opening in the first valve member is at a maximum,
in which the opening has a first portion defined by the valve members during translation through 10% of the distance from the first limiting position towards the second limiting position and a second portion defined by the valve members during translation through the last 10% of its translation from the first limiting position to the second limiting position,
and in which the ratio of the change in the open area of the first opening as a result of translation of the valve member across the first portion of the first opening to the change in the open area of the first opening as a result of translation of the valve member across the second portion of the first opening is not more than about 0.5.

The system provided by the invention has the advantage that the quantity of fluid that is able to flow through the purge conduit can be adjusted to suit the requirements of a particular application. This can help to ensure that sufficient fluid flows through the purge conduit to achieve satisfactory desorption of adsorbed contaminants which have been adsorbed on to the adsorption medium in the chamber which is to be regenerated. It can also help to ensure that the quantity of fluid which is supplied to the regenerating chamber from the online chamber is not more than is necessary to achieve satisfactory desorption.

The variable flow restrictor allows adjustment of the throughflow of fluid across a wide range of flow rates with higher resolution at low flow rates than at higher flow rates. This can facilitate accurate selection of a desired flow rate at both low and high rates.

Optionally, the ratio of the change in the open area of the first opening as a result of translation of the second valve member across the first portion of the first opening to the change in the open area of the first opening as a result of translation of the valve member across the second portion of the first opening is not more than about 0.3, for example not more than about 0.2, or not more than about 0.1. For some applications, the value of the ratio might be not more than about 0.05.

Optionally, the first valve member is fixed relative to the purge conduit when the system is in use and the second valve member is capable of movement relative to the first valve member under the action of the drive mechanism. In another arrangement, the second valve member is fixed relative to the purge conduit when the system is in use and the first valve member is capable of movement relative to the second valve member under the action of the drive mechanism.

The first valve member can be provided by a tubular shaft, with the opening in the wall of the shaft. The tubular shaft can be rounded when viewed in cross section. For example it can be circular when viewed in cross-section. This can have advantages when the second valve member is a piston which slides within the shaft because it can facilitate the formation of a fluid tight seal between the first and second valve members.

When the first valve member is provided by a tubular shaft, it can have a second opening in its wall on the opposite side of the shaft from the first opening so that fluid flowing along the purge conduit has to flow through one of the openings into the shaft and out of the shaft through the other opening. Optionally, the shape of the first opening is the same as the shape of the second opening. This can have the advantage of matching the resistance to flow that is provided by the openings in the two directions through the tubular shaft. However, it is envisaged that the shape of the second opening might be different from that of the first opening for some applications. For example the second opening might be circular.

The second valve member can slide relative to the wall of the shaft. The second valve member might be a sleeve which slides along the outside of the shaft. A second valve member in the form of a sleeve might have a closed cross-section so that the shaft is received fully within the sleeve.

It can be preferred that the second valve member is configured as a piston, and relative movement of the first and second valve members involves movement of the piston within the shaft.

The drive mechanism can comprise mating male and female threaded parts so that rotation of one part relative to the other part causes one of the valve members to slide relative to the other valve member. The use of mating threaded parts has the advantage that the amount of movement that is imparted by a user can be controlled finely so that a user can choose freely to impart movement through a desired angle, for example 90° or 180° or 360° or 1800°, or some smaller or intermediate or larger angle. The valve can be designed so that the effect of moving one of the threaded parts rotationally relative to the other threaded part leads to a known movement of one of the valve members relative to the other valve member. The effect on the effective size of the opening in the first valve member of that movement of one valve member relative to the other valve member will depend on the relative positions of the valve members. The effect on the opening size will be smaller when the size of the opening is small compared with the effect on the opening size when the size of the opening is large.

In an example of a drive mechanism which can be used in the system, one of the valve members can include a portion which has a male thread. The drive mechanism can include a mount having a bore formed in it which is internally threaded, in which the threaded portion of the valve member is received.

Optionally, the drive mechanism has at least one indicium which indicates the rotational position of one of the threaded parts relative to the other of the threaded parts.

Optionally, the ratio of the width of the opening at the edge thereof defined by the second valve member when the second valve member has translated 10% of the distance from the first limiting position towards the second limiting position to the width of the opening at the edge thereof defined by the second valve member when the second valve member has translated 90% of the distance from the first limiting position towards the second limiting position is not more than about 10%. The value of the ratio might be not more than about 7%, or not more than about 5%.

It can be preferred that the width of the opening increases continuously over at least 60% of the distance from the first limiting position to the second limiting position. The width of the opening can increase continuously between 30% and 80% of the distance from the first limiting position to the second limiting position. For example the width of the opening can increase from 20% or from 15% or from 10% of the distance from the first limiting position to the second limiting position. The width of the opening can increase to 85% or to 90% or to 95% of the distance from the first limiting position to the second limiting position. The width of the opening might decrease over the last part of the distance to the second limiting position. This might happen when for example the opening includes a portion which is defined by the outline of a circle and the second limiting position is on the opposite side of the diameter of the circle from the first limiting position.

It can be preferred that the width of the opening increases slowly or not at all in the initial part of the travel from the first limiting position to the second limiting position. This can help to provide the fine control over the change in the effective open area of the opening. Optionally, the ratio of the width of the opening defined by the second valve member when the second valve member has translated 10% of the distance from the first limiting position towards the second limiting position to the width of the opening when the second valve member has translated 1% of the distance from the first limiting position towards the second limiting position is at least about 0.9. Optionally, the width of the first portion of the opening measured perpendicular to the axis along which the valve members move relative to one another is approximately constant over at least 80% of the length of the first portion. The width might vary at the end of the first portion which is located furthest from the second limiting position (the "fully closed" end of the opening") by virtue of it being tapered at that end. For example, the opening might be rounded at that end. The opening may comprise a slot portion having substantially parallel sides. The opening may comprise a substantially circular portion. The opening may be generally keyhole shaped.

Optionally, the opening includes a major portion which the valve member translates across towards the second limiting position after translating across the first portion, and in which the width of the major portion increases progressively towards the second limiting position of the valve member. As discussed above, the width of the opening might decrease over the last part of the distance to the second limiting position. This might happen when for example the opening includes a portion which is defined by the outline of a circle and the second limiting position is on the opposite side of the diameter of the circle from the first limiting position.

Optionally, the major portion of the first opening is defined by the outline of part of a circle. For example, the major portion of the first opening can be defined by the outline of a part of a circular having an angle of arc of at least about 160°, optionally at least about 170°, especially at least about 180°. The angle of arc of the circle might be less than 360°, for example not more than about 270°, especially not more than about 225°.

Optionally, the width of the major portion of the first opening can increase linearly with distance towards the second limiting position so that the major portion of the first opening is triangular when the opening is viewed from one side.

The system of the invention can be used to remove contaminants from a fluid. The fluid can be a gas or a liquid. When the fluid is a gas, the system can be used to remove fluids from the gas which are liquid or gaseous. For example, the system can be used to remove water from a pressurised gas. The water can be present in the gas as vapour or as droplets.

The system can be used to separate components of a mixture of fluids. For example, when a fluid contains first and second constituents, the system can be used to adsorb the second constituent so that the fluid contains the first constituent with little or none of the second constituent. An example of such an application for the system might include the generation of nitrogen from a mixture of nitrogen and oxygen (especially ambient air) in which the system is used to adsorb oxygen from the mixture.

The adsorbent material that is provided in the chambers is selected according to the intended application for the system. For example, the adsorbent material can include a desiccant when the system is used to remove water from a gas. Factors affecting the selection of adsorbent material for a pressure swing adsorption system are well understood and are applicable to the system of the present invention. Known adsorbent materials can be used in the system of the invention.

The configuration of the system will be selected according to the intended purpose of the system taking account of known factors and parameters affecting the design of pressure swing adsorption systems. Such factors and parameters can be useful in selecting the materials and dimension of components of the system.

It can be preferred that the first and second members of the valve are made from metallic materials. Examples of suitable metallic materials include aluminium and aluminium based alloys, and certain stainless steels.

The materials used for O-ring seals in the system will be selected according to the material with which the seals will come into contact when the system is in use, and the conditions to which the seals will be exposed. Polymeric materials and rubbers will be useful for many applications. An example of a suitable rubber might be an acrylonitrile-butadiene rubber. A suitable material can have a hardness measured on the Shore A scale of 90.

Pressure swing adsorption systems and components of such systems are described below by way of example with reference to the accompanying drawings, in which:
Figure 1 is a schematic flow chart showing a pressure swing adsorption system for a pressurised gas.
Figure 2 is an exploded view of an assembly which includes the adjustable flow restrictor and re-pressurisation valve components of the system shown in Figure 1.
Figure 3 is a cross-section through the adjustable flow restrictor and re-pressurisation valve components shown in Figure 2.
Figure 4 is an enlarged cross-section view of the adjustable flow restrictor shown in Figure 3.
Figure 5 is an isometric view of the sleeve valve member of the adjustable flow restrictor component of the assembly shown in Figure 2.
Figure 6 is a schematic view of the opening that is provided in the sleeve valve member shown in Figure 5.
Figure 7 is a graph showing the variation in the total open area of the opening in a flow restrictor with the variation in position of the piston valve member relative to the sleeve valve member.

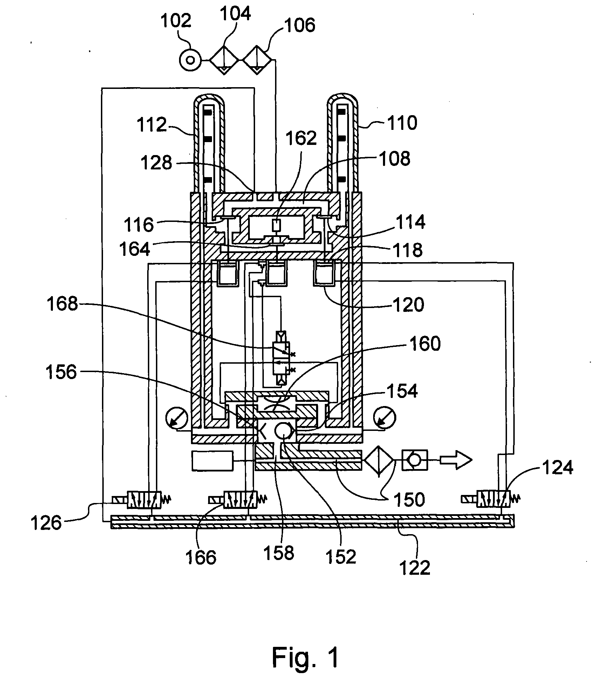

Referring to the drawings, Figure 1 is a schematic flow chart showing features of a pressure swing adsorption system for treating a fluid. For example the system might be used to remove moisture from a pressurised gas such as compressed air. The system has an inlet 102 for a pressurised gas with separators 104, 106 for removing bulk water. The gas is delivered from the separators to an inlet manifold 108. First and second chambers 110, 112 are connected to the inlet manifold 108. Each of the chambers contains an adsorbent material. The nature of the adsorbent material will depend on the nature of the contaminants which are to be removed from the compressed fluid. For example, the adsorbent material will include a desiccant when the system is used to remove moisture from a compressed gas such as compressed air.

First and second inlet valves 114, 116 control flow of gas from the inlet manifold 108 to the first and second chambers. The first inlet valve 114 is controlled by means of a piston and cylinder arrangement, where the position of the piston 118 in the cylinder 120 is controlled by means of a flow of pilot gas from a pilot gas manifold 122. The flow of gas from the pilot gas manifold 122 to the first inlet valve 114 is controlled by means of a first 5:2 valve 124. Similarly, the second inlet valve is controlled by means of a piston and cylinder arrangement, which is controlled by means of a second 5:2 valve 126. Pressure is maintained in the pilot gas manifold by means of compressed gas which is supplied from the inlet manifold 108 through a pilot gas port 128.

Gas which has been treated in the chambers 110, 112 is discharged from the system through a system outlet conduit 150. A shuttle valve 152 controls the flow of the treated gas between one of the chambers and the outlet. Details of a shuttle valve which can be used in the system are disclosed in the International patent application which is filed with the present application, title SHUTTLE VALVE, and which was the subject of UK patent application no. 1705123.6 (from which the present application claims priority) and published as WO-2018/178661A1.

The shuttle valve 152 has a first port 154 through which the gas stream is received from the first chamber 110 and a second port 156 through which the gas stream is received form the second chamber 112. The shuttle valve has a third port 158 through which treated gas is discharged from the system. The shuttle valve has two positions. In the position shown in Figure 1, the shuttle valve allows flow of treated gas from the second chamber 112 through the second port 156, and through the third port 158 into the outlet conduit 150. The shuttle valve shuts off flow of fluid from the second chamber into the valve.

Operation of a pressure switching adsorption system involves regenerating the adsorbent material in one chamber while the other chamber is adsorbing contaminants from the pressurised fluid. This is achieved in the system shown in Figure 1 by means of a purge stream which is taken from the gas which has been treated in the second chamber 112. The purge stream is admitted to the first chamber through a variable flow restrictor 160. The purge stream is vented to atmosphere through an exhaust 162, controlled by an exhaust valve 164. The exhaust valve is controlled by means of a piston and cylinder arrangement, where the position of the piston in the cylinder is controlled by means of a flow of pilot gas from the pilot gas manifold 122. The flow of gas from the pilot gas manifold 122 to the exhaust valve 164 is controlled by means of a third 5:2 valve 166.

The system can include a re-pressurisation valve 168 which allows the flow restrictor 160 to be by-passed. The re-pressurisation valve is a three port valve which has two positions. Examples of valves which can be useful in some applications include those sold by Parker Hannifin Corporation under the trade marks VIKING, VIKING EXTREME and VIKING LITE, especially the two position valves which are double remote pilot operated. Gas can by-pass the flow restrictor when the re-pressurisation valve is in its open position as shown in Figure 1. Gas is prevented from by-passing the flow restrictor by the re-pressurisation valve when it is in its closed position. The re-pressurisation valve is controlled with the piston and cylinder arrangement of the exhaust valve by means of the flow of pilot gas from the pilot gas manifold so that the re-pressurisation valve is in its open position, allowing gas to by-pass the flow restrictor, when the exhaust valve is closed. The re-pressurisation valve is in its closed position, preventing gas from by-passing the flow restrictor, when the exhaust valve is open.

Details of the operation of a pressure swing adsorption system are known. The period in which a first chamber is online for treatment of the compressed air or other fluid will be determined according to the nature of the fluid, the nature of the contaminant materials in the fluid which are to be adsorbed, the amount of contaminant materials in the fluid and so on. It is usual for the period in which the second chamber is regenerated by exposure to the purge stream to be less than the period in which the first chamber is online, to allow a period in which the exhaust valve is closed and the re-pressurisation valve (if present) is open and in which the pressure in the second chamber increases to a level which is close or equal to that in the first chamber. For example, a typical system might run with a 360 second operating cycle, in which one chamber is online, with its inlet valve open, for a period of 180 seconds. The other chamber is offline for the whole of that period by maintaining its inlet valve closed. The exhaust valve is opened one second into that cycle, and remains open for 149 seconds. The exhaust valve is then closed, causing the re-pressurisation valve to switch to its open position, for the remaining 30 seconds of that phase of the operating cycle. This sequence is then repeated with the roles of the two chambers reversed.

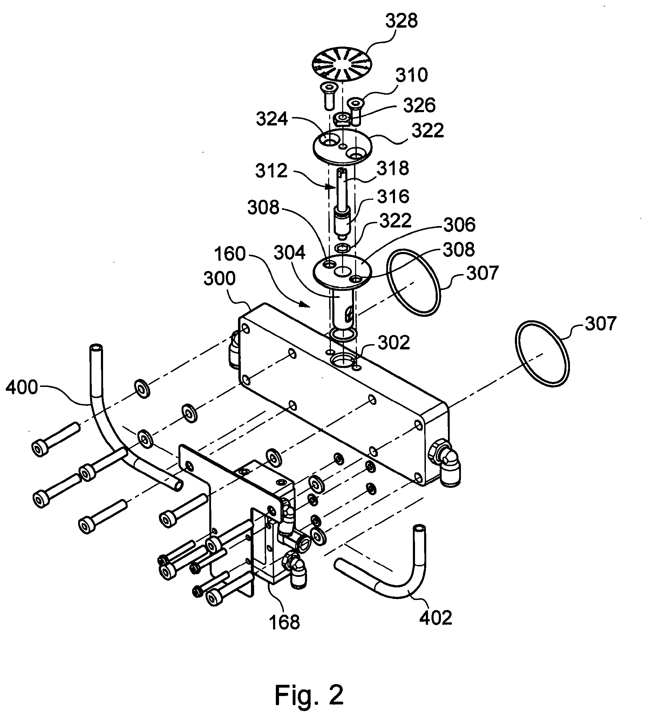

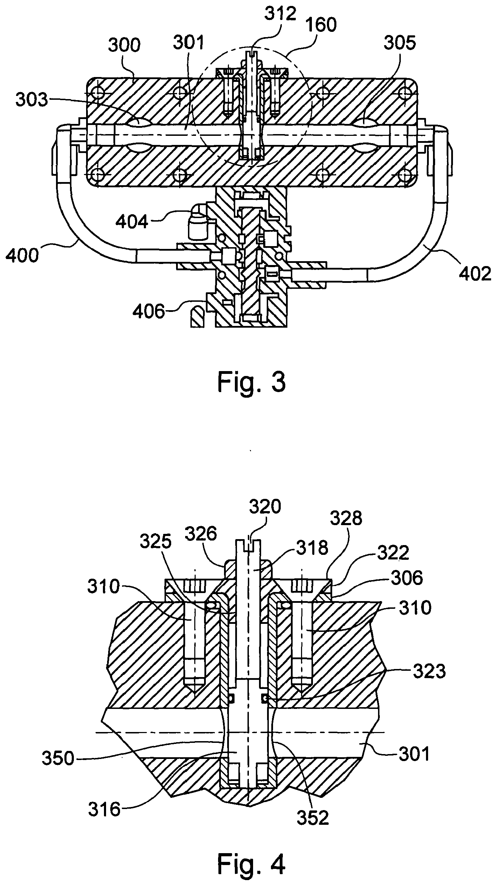

Figures 2 to 6 show in more detail features of the variable flow restrictor 160 and re-pressurisation valve 168 which are incorporated as parts of the dryer shown in Figure 1.

The variable flow restrictor 160 is incorporated in a block 300 which has a channel 301 flowing through it for a purge stream to flow from the chamber which is pressurised and online to the chamber which is being regenerated. In the configuration shown in Figure 1, it is the second column 112 which is online and it is the first column 110 which is being regenerated. The rate of flow of the purge stream through the channel is controlled by means of the flow restrictor which is fitted into a bore 302 in the block 300 which extends perpendicular to the channel 301 and intersects it at about its midpoint.

The block has first and second main ports 303, 305 formed in one of its principal faces. The ports communicate with the channel 301 in the block. The ports are positioned so that each of them receives fluid which has been treated in a respective one of the chambers when the block is clamped in position. The channel, with the flow restrictor within it, then connects the chambers. O-ring seals 307 are provided surrounding each of the main ports to ensure that a fluid tight seal is provided between the block and the chambers.

The variable flow restrictor 160 includes a tubular sleeve valve member 304 which is a sliding fit in the bore in the block 300. The sleeve valve member has a circular plate 306 at one end. The plate has two holes 308 formed in it which can receive screws 310 to fasten the sleeve valve member to the block 300, as described below.

A piston valve member 312 fits in the tubular sleeve valve member 304. The piston valve member has a wide portion 316 which is a sliding fit within the tubular sleeve valve member 304 and a shaft 318 which extends from the wide portion and protrudes from the top of the sleeve valve member. A slot 320 is formed in the exposed end of the shaft. A compressible O-ring seal 323 is provided in a groove in the external circumferential surface of the wide portion 316 of the piston valve member which provides a seal between the piston valve member and the tubular sleeve valve member. The material and dimensions of this and other O-ring seals which are used in the system are selected to meet the requirements of a particular application taking account of factors such as materials with which the O-ring will come into contact when the system is in use, operating pressures and so on. Such criteria for selection of seal components are well understood.

The external surface of the piston valve member has a male thread formed on it. The thread is configured to engage the female thread that is provided on the internal surface of the valve member. The position and length of the thread on the piston valve member are selected to ensure that the piston valve member can be moved within the sleeve valve member by rotating the piston valve member relative to the sleeve valve member, and for the range of positions of the piston valve member relative to the sleeve valve member to be sufficient to provide a desired range of effective sizes of the open area of the first opening in the sleeve valve member, as discussed below.

A cover plate 322 having a pair of countersunk holes 324 formed in it can be fitted over the circular plate 306 of the sleeve valve member. The cover plate 322 has a central collar portion 325 which carries an internal female thread which engages a male thread on the shaft 318 of the piston valve member 312. The cover plate 322 and the circular plate 306 are fastened in place by means of the fastening screws 310.

A lock nut 326 is provided which can engage the thread on the end of the piston valve member where it protrudes from the sleeve valve member. The lock nut can be used to lock against the piston valve member once a desired position for the piston valve member relative to the sleeve valve member has been reached, to prevent subsequent inadvertent movement of the piston valve member.

Rotation of the piston valve member 312 relative to the sleeve valve member 304 causes the piston valve member to slide axially within the sleeve valve member 304. The distance through which the piston valve member slides for each complete turn is determined by the pitch of the engaging threads on the shaft 318 and the internal surface of the sleeve valve member.

A printed disk 328 can be secured to the cover plate 322. The disk has a central hole so that it can be fitted over the exposed end of the shaft 318 of the piston valve member 312. The disk has markings on it which facilitate measurement by a user of the angle through which the piston valve member 312 is rotated relative to the block 300. The slot in the exposed end of the shaft can be used as a reference for this purpose. It can also be engaged by an instrument such as a screw driver to apply torque to the piston valve member.

The tubular sleeve valve member 304 has first and second openings 350, 352 formed in its wall. The first opening is located diametrically opposite to the second opening. The sleeve valve member is fitted in the block 300 so that a line extending through the centres of first and second openings is parallel to the channel 301 in the block.

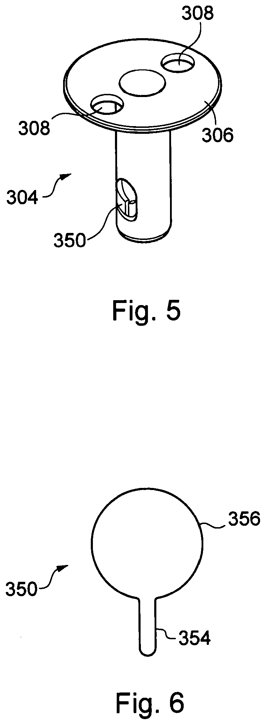

The shapes of the openings 350, 352 in the tubular sleeve valve member 304 can be understood by referring Figures 5 and 6. The first opening 350 is shown in these drawings. In the described system, the openings have the same shape. The shapes of openings might differ from one another for some applications; for example, one of the openings might have a simpler shape (such as circular) to reduce manufacturing cost.

The first opening 350 has a slot portion 354 which has parallel sides. The slot portion of the opening is located towards the end of the sleeve valve member which is opposite to the end on which the circular plate 306 is fitted. The slot portion has a rounded closed end.

The first opening 350 has a circular portion 356. The slot portion 354 opens into the circular portion 356 at its end opposite to the rounded closed end.

The shape of the slot portion 354 and the circular portion 356 may be such that the opening 350 is generally keyhole-shaped.

The parallel sides of the slot portion mean that the ratio of the width of the opening defined by the valve member when the valve member has translated 10% of the distance from the first limiting position towards the second limiting position to the width of the opening when the valve member has translated 1% of the distance from the first limiting position towards the second limiting position is at least about 0.9. The width of the slot portion measured perpendicular to the axis along which the piston valve member moves relative to the sleeve valve member is approximately constant over at least 80% of the length of the slot portion.

The effective open area of the first opening is dependent on the position of the bottom edge of the wide portion 316 of the piston valve member 312 relative to the opening 350. The open area of the opening is provided by the portion of the opening between the bottom edge of the wide portion of the piston valve member and the bottom edge of the slot portion of the opening. The open area of the opening increases as the piston valve member moves across the opening in a direction from the bottom edge of the slot portion towards the top edge of the circular portion.

The rate of change in the open area of the first opening as a result of translation of the piston valve member across the slot portion of the opening is approximately directly proportional to the distance translated by the piston valve member, in particular the bottom edge of the wide portion of the piston valve member. This is because of the parallel sides of the slot portion.

The rate of change in the open area of the first opening as a result of translation of the piston valve member across the circular portion of the opening increases as the bottom edge of the piston valve member moves from the interface between the slot and circular portions of the opening, towards the circular portion 356 at its widest point. The widest point will be defined by the diameter of the circular portion which is perpendicular to the axis along which the piston valve member translates relative to the sleeve valve member. In other words, the rate of increase in the effective open area of the opening increases as the open area increases.

The piston valve member 312 has a first limiting position in which the bottom edge of its wide portion 316 is at or close to the bottom of the rounded bottom edge of the slot portion 354 of the opening.

The piston valve member 312 has a second limiting position in which the bottom edge of its wide portion is at or close to diameter of the circular portion 356 which is perpendicular to the direction along which the piston valve member translates. The objective of having the rate of change in the open area of the opening increasing throughout the change in the position of the piston valve member to the second limiting position is met when the second limiting position coincides with the widest point or is between the widest point of the circular portion of the opening and the slot portion. However, the system of the invention can be implemented usefully when the second limiting position of the piston valve member lies between the widest point of the circular portion and the edge of the circular portion which is furthest from the slot portion.

An advantage of using an opening which has a circular portion such as that shown in Figures 5 and 6 is that the opening can be formed conveniently by drilling. This also applies to the rounded end of the slot portion of the opening.

Openings having other shapes can be used. An example of a useful opening is one which is Y-shaped, with a narrow slot (which preferably has parallel sides) which opens into a flared portion. This can enable the objective identified in the preceding paragraph to be realised.

As shown in Figure 5, the opening can be formed in a part of the wall of the sleeve valve member where the wall thickness has been reduced, for example by milling. The reduction in the wall thickness will generally be achieved by removing material from the external surface of the sleeve valve member. A local reduction in the thickness of the wall of the sleeve valve member can help to improve the accuracy with which the opening in the wall is formed in a subsequent step, for example by milling or drilling or a combination of the two.

The system includes first and second conduits 400, 402 which extend from the block 300 to the re-pressurisation valve 168. When the re-pressurisation valve is in its open position, fluid can flow through it between the first and second conduits. The re-pressurisation valve then provides another path along which fluid can flow between the first and second chambers, other than along the channel 301 in the block 300 through the flow restrictor 160. The re-pressurisation valve has control ports 404, 406 by which it can be controlled, as is apparent from inspection of Figure 1.

In an example, the width of the slot portion 354 is 1 mm and the radius of the rounded closed end is 0.5 mm. The length of the slot portion measured between the bottom of the rounded closed end to the interface between the top of the slot portion and the circular portion 356 is 3.5 mm. The radius of the circular portion 356 is 3.5 mm.

The total open area of the opening when the piston valve member is located at the top of the slot portion 354 of the opening is 3.39 mm². This corresponds to a height of 3.5 mm above the bottom of the rounded closed end of the slot portion.

The total open area of the opening when the piston valve member is located at the height of the diameter of the circular portion 356 of the opening is 22.63 mm². This corresponds to a height of 7 mm above the bottom of the rounded closed end of the slot portion.

The flow restrictor can be calibrated by correlating the variation in the position of the piston valve member with the number of turns of the piston valve member relative to the sleeve valve member. This relationship between the position of the piston valve member and the number of turns of the piston valve member is dependent on the pitch of the threads on the internal surface of the sleeve valve member and on the piston valve member. For example, if the pitch of the thread is 1 mm in the example flow restrictor discussed above, the number of turns required to advance the piston valve member from the top of the slot portion 354 to the diameter of the circular portion 356 is 3.5.

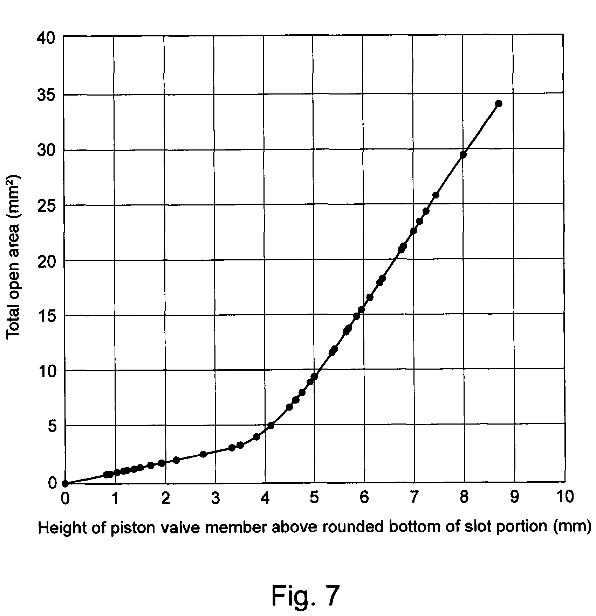

Figure 7 shows the variation in the total open area of the opening with the variation in position of the piston valve member. The variation in total open area is approximately linear as the piston valve member moves to the top of the slot portion of the opening (position = 4 mm). The rate of increase of the open area then increases as the piston valve member moves to the widest part of the circular portion (position = 7 mm). The rate of increase of the open area then reduces as the piston valve member moves beyond the widest part of the circular portion. The curve has the shape of a shallow "S" in the portion which relates to the movement of the piston valve member beyond the top of the slot portion of the opening.

In use, the position of the piston valve member in the sleeve valve member will be selected to provide an appropriate flow rate for a fluid through the purge conduit to achieve a purge of adsorbed contaminants on the adsorbent material in the chamber which is to be regenerated. The purge should be achieved in the offline part of the operating cycle (which lasts 149 seconds during the 360 second operating cycle in the example discussed above).

## Claims

1. A pressure swing adsorption system which includes first (110) and second (112) chambers, each containing an adsorption medium, in which when the system is in use a fluid is directed to flow over the adsorption medium in one of the chambers in order to adsorb contaminants in the fluid while the adsorption medium in the other of the chambers is regenerated by desorption of adsorbed contaminants, the system including a purge conduit (301) which extends between the first and second chambers for delivering fluid when the system is in use from the chamber to which fluid is supplied for adsorption of contaminants to the chamber which is being regenerated, and in which the system includes a variable flow restrictor (160) for controlling the volume of fluid which can flow through the purge conduit when the system is in use
**characterised in that** the flow restrictor comprises:
a. a first valve member (304) which has an opening (350) in its wall,
b. a second valve member (312) which is in sliding contact with the first valve member so that the opening in the wall of the first valve member is progressively occluded when one of the valve members slides relative to the other of the valve members,
c. a drive mechanism (318, 320, 325) for controlling the relative positions of the first and second valve members between a first limiting position in which the effective open size of the opening in the first valve member is at a minimum and a second limiting position in which the size of the opening in the first valve member is at a maximum,
in which the opening has a first portion defined by the valve members during translation through 10% of the distance from the first limiting position towards the second limiting position and a second portion defined by the valve members during translation through the last 10% of its translation from the first limiting position to the second limiting position,
and in which the ratio of the change in the open area of the opening as a result of translation of the valve member across the first portion of the opening to the change in the open area of the opening as a result of translation of the valve member across the second portion of the opening is not more than 0.5.

2. A system as claimed in claim 1, in which the first valve member (304) is fixed relative to the purge conduit (301) when the system is in use and the second valve member (312) is capable of movement relative to the first valve member under the action of the drive mechanism (318, 320, 325).

3. A system as claimed in claim 1 or claim 2, in which the first valve member (304) is provided by a tubular shaft having a wall, with the opening (350) in the wall of the shaft.

4. A system as claimed in claim 3, in which the shaft has a second opening (352) in its wall on the opposite side of the shaft from the first opening (350) so that fluid flowing along the purge conduit (301) has to flow through one of the openings into the shaft and out of the shaft through the other opening; optionally in which the shape of the first opening is the same as the shape of the second opening.

5. A system as claimed in either of claims 3 or 4, in which the second valve member (312) slides relative to the wall of the shaft.

6. A system as claimed in claim 5, in which the second valve member (312) is configured as a piston, and relative movement of the first (304) and second valve members involves movement of the piston within the shaft.

7. A system as claimed in any one of claims 1 to 6, in which the drive mechanism (318, 320, 325) comprises mating male and female threaded parts (318, 325) so that rotation of one part relative to the other part causes one of the valve members (304, 312) to slide relative to the other valve member.

8. A system as claimed in claim 7, in which one of the valve members (304, 312) includes a portion which has a male thread and the drive mechanism (318, 320, 325) includes a mount (325) having a bore formed in it which is internally threaded, in which the threaded portion of the said valve member is received.

9. A system as claimed in claim 7 or claim 8, in which the drive mechanism (318, 320, 325) has at least one indicium (328) which indicates the rotational position of one of the threaded parts (318, 325) relative to the other of the threaded parts.

10. A system as claimed in any one of claims 1 to 9, in which the ratio of the width of the opening at the edge thereof defined by the second valve member (312) when the second valve member has translated 10% of the distance from the first limiting position towards the second limiting position to the width of the opening at the edge thereof defined by the second valve member when the second valve member has translated 90% of the distance from the first limiting position towards the second limiting position is not more than 10%.

11. A system as claimed in any one of claims 1 to 10, in which the ratio of the width of the opening defined by the second valve member (312) when the second valve member has translated 10% of the distance from the first limiting position towards the second limiting position to the width of the opening when the second valve member has translated 1% of the distance from the first limiting position towards the second limiting position is at least 0.9.

12. A system as claimed in any one of claims 1 to 11, in which the opening (350) comprises:
a slot portion (354) having parallel sides; and/or
a circular portion (356).

13. A system as claimed in any one of claims 1 to 12, in which the opening (350) is keyhole shaped.

14. A system as claimed in any one of claims 1 to 13, in which the width of the first portion of the opening (350) measured perpendicular to the axis along which the valve members (304 ,312) move relative to one another is constant over at least 80% of the length of the first portion.

15. A system as claimed in any one of claims 1 to 14, in which the opening (350) includes a major portion (356) which the valve member translates across towards the second limiting position after translating across the first portion (354), and in which the width of the major portion increases progressively towards the second limiting position of the valve member; optionally in which the major portion of the first opening is defined by the outline of part of a circle.

## Patentansprüche

1. Druckwechseladsorptionssystem, das erste (110) und zweite (112) Kammern enthält, die jede ein Adsorptionsmedium enthalten, wobei, wenn das System in Gebrauch ist, ein Fluid zum Strömen über das Adsorptionsmedium in einer der Kammern geleitet wird, um Schmutzstoffe im Fluid zu adsorbieren, während das Adsorptionsmedium in der anderen der Kammern durch Desorption von adsorbierten Schmutzstoffen regeneriert wird, wobei das System eine Spülleitung (301) enthält, die zwischen den ersten und zweiten Kammern zum Zuführen von Fluid, wenn das System in Gebrauch ist, aus der Kammer, der Fluid zur Adsorption von Schmutzstoffen zugeführt wird, zur Kammer, die regeneriert wird, verläuft, und wobei das System eine variable Strömungsdrossel (160) zum Steuern des Volumens von Fluid enthält, das durch die Spülleitung strömen kann, wenn das System in Gebrauch ist,
**dadurch gekennzeichnet, dass** die Strömungsdrossel umfasst:
a. ein erstes Ventilglied (304), das eine Öffnung (350) in seiner Wand aufweist,
b. ein zweites Ventilglied (312), das derart mit dem ersten Ventilglied in Gleitkontakt steht, dass die Öffnung in der Wand des ersten Ventilglieds fortschreitend verdeckt wird, wenn eines der Ventilglieder bezüglich des anderen Ventilglieds gleitet,
c. einen Antriebsmechanismus (318, 320, 325) zum Steuern der relativen Positionen des ersten und zweiten Ventilglieds zwischen einer ersten Begrenzungsposition, in der die effektive Öffnungsgröße der Öffnung im ersten Ventilglied auf einem Minimum ist, und einer zweiten Begrenzungsposition, in der die Größe der Öffnung des ersten Ventilglieds auf einem Maximum ist,
wobei die Öffnung einen ersten Abschnitt aufweist, der durch die Ventilglieder während der Verschiebung über 10% der Distanz von der ersten Begrenzungsposition zur zweiten Begrenzungsposition hin definiert wird, und einen zweiten Abschnitt aufweist, der durch die Ventilglieder während der Verschiebung über die letzten 10% ihrer Verschiebung von der ersten Begrenzungsposition zur zweiten Begrenzungsposition definiert wird,
und wobei das Verhältnis der Änderung des offenen Bereichs der Öffnung infolge der Verschiebung der Ventilglieder über den ersten Abschnitt der Öffnung hinweg zur Änderung des offenen Bereichs der Öffnung infolge der Verschiebung der Ventilglieder über den zweiten Abschnitt der Öffnung hinweg nicht mehr als 0,5 beträgt.

2. System nach Anspruch 1, wobei das erste Ventilglied (304) bezüglich der Spülleitung (301) starr ist, wenn das System in Gebrauch ist, und das zweite Ventilglied (312) zur Bewegung bezüglich des ersten Ventilglieds unter der Einwirkung des Antriebsmechanismus (318, 320, 325) imstande ist.

3. System nach Anspruch 1 oder Anspruch 2, wobei das erste Ventilglied (304) durch einen röhrenförmigen Schaft mit einer Wand vorgesehen ist, wobei die Öffnung (350) in der Wand des Schafts liegt.

4. System nach Anspruch 3, wobei der Schaft eine zweite Öffnung (352) in seiner Wand auf der gegenüberliegenden Seite des Schafts zur ersten Öffnung (350) aufweist, sodass Fluid, das die Spülleitung (301) entlang strömt, durch eine der Öffnungen in den Schaft und durch die andere Öffnung aus dem Schaft strömen muss, wobei optional die Form der ersten Öffnung dieselbe wie die Form der zweiten Öffnung ist.

5. System nach einem der Ansprüche 3 oder 4, wobei das zweite Ventilglied (312) bezüglich der Wand des Schafts gleitet.

6. System nach Anspruch 5, wobei das zweite Ventilglied (312) als ein Kolben konfiguriert ist, und wobei relative Bewegung des ersten (304) und zweiten Ventilglieds Bewegung des Kolbens innerhalb des Schafts beinhaltet.

7. System nach einem der Ansprüche 1 bis 6, wobei der Antriebsmechanismus (318, 320, 325) zusammenpassende männliche und weibliche Gewindeteile (318, 325) umfasst, sodass Drehung von einem Teil bezüglich des anderen Teils bewirkt, dass eines der Ventilglieder (304, 312) bezüglich des anderen Ventilglieds gleitet.

8. System nach Anspruch 7, wobei eines der Ventilglieder (304, 312) einen Abschnitt enthält, der ein männliches Gewinde aufweist, und der Antriebsmechanismus (318, 320, 325) eine Anbringung (325) enthält, die eine Bohrung darin ausgebildet aufweist, welche mit Innengewinde versehen ist, in dem der Gewindeabschnitt des Ventilglieds aufgenommen ist.

9. System nach Anspruch 7 oder Anspruch 8, wobei der Antriebsmechanismus (318, 320, 325) zumindest eine Markierung (328) aufweist, die die Drehposition von einem der Gewindeteile (318, 325) bezüglich des anderen der Gewindeteile anzeigt.

10. System nach einem der Ansprüche 1 bis 9, wobei das Verhältnis der Breite der Öffnung an der Kante davon, die durch das zweite Ventilglied (312) definiert ist, wenn sich das zweite Ventilglied über 10% der Distanz von der ersten Begrenzungsposition zur zweiten Begrenzungsposition hin verschoben hat, zur Breite der Öffnung an der Kante davon, die durch das zweite Ventilglied definiert ist, wenn sich das zweite Ventilglied über 90% der Distanz der Distanz von der ersten Begrenzungsposition zur zweiten Begrenzungsposition hin verschoben hat, nicht mehr als 10% beträgt.

11. System nach einem der Ansprüche 1 bis 10, wobei das Verhältnis der Breite der Öffnung, die durch das zweite Ventilglied (312) definiert ist, wenn sich das zweite Ventilglied über 10% der Distanz von der ersten Begrenzungsposition zur zweiten Begrenzungsposition hin verschoben hat, zur Breite der Öffnung, wenn sich das zweite Ventilglied über 1% der Distanz der Distanz von der ersten Begrenzungsposition zur zweiten Begrenzungsposition hin verschoben hat, zumindest 0,9 beträgt.

12. System nach einem der Ansprüche 1 bis 11, wobei die Öffnung (350) umfasst:
einen Schlitzabschnitt (354) mit parallelen Seiten; und/oder
einen kreisförmigen Abschnitt (356).

13. System nach einem der Ansprüche 1 bis 12, wobei die Öffnung (350) schlüssellochförmig ist.

14. System nach einem der Ansprüche 1 bis 13, wobei die Breite des ersten Abschnitts der Öffnung (350) bei Messung senkrecht zur Längsachse, entlang welcher sich die Ventilglieder (304, 312) in Bezug zueinander bewegen, über zumindest 80% der Länge des ersten Abschnitts konstant ist.

15. System nach einem der Ansprüche 1 bis 14, wobei die Öffnung (350) einen größeren Abschnitt (356) enthält, über den sich das Ventilglied zur zweiten Begrenzungsposition hin nach dem Verschieben über den ersten Abschnitt (354) hinweg verschiebt, und wobei sich die Breite des größeren Abschnitts zur zweiten Begrenzungsposition des Ventilglieds hin fortschreitend erhöht; wobei optional der größere Abschnitt der ersten Öffnung durch den Umriss eines Teils eines Kreises definiert ist.

## Revendications

1. Système d'adsorption modulée en pression qui comporte des première (110) et deuxième (112) chambres, chacune contenant un milieu d'adsorption, dans lequel, lorsque le système est en cours d'utilisation, un fluide est dirigé pour s'écouler sur le milieu d'adsorption dans l'une des chambres afin d'adsorber des contaminants dans le fluide tandis que le milieu d'adsorption dans l'autre des chambres est régénéré par désorption des contaminants adsorbés, le système comportant un conduit de purge (301) qui s'étend entre les première et deuxième chambres pour distribuer le fluide, lorsque le système est en cours d'utilisation, depuis la chambre à laquelle le fluide est fourni pour l'adsorption de contaminants vers la chambre qui est régénérée, et dans lequel le système comporte un réducteur d'écoulement variable (160) pour commander le volume de fluide qui peut s'écouler à travers le conduit de purge lorsque le système est en cours d'utilisation
**caractérisé en ce que** le réducteur d'écoulement comprend :
a. un premier élément de soupape (304) qui a une ouverture (350) dans sa paroi,
b. un deuxième élément de soupape (312) qui est en contact coulissant avec le premier élément de soupape de sorte que l'ouverture dans la paroi du premier élément de soupape soit progressivement obturée lorsque l'un des éléments de soupape coulisse par rapport à l'autre des éléments de soupape,
c. un mécanisme d'entraînement (318, 320, 325) pour commander les positions relatives des premier et deuxième éléments de soupape entre une première position limite dans laquelle la taille d'ouverture effective de l'ouverture dans le premier élément de soupape est à son minimum et une deuxième position limite dans laquelle la taille de l'ouverture dans le premier élément de soupape est à son maximum,
dans lequel l'ouverture a une première partie définie par les éléments de soupape pendant la translation sur 10% de la distance depuis la première position limite vers la deuxième position limite et une deuxième partie définie par les éléments de soupape pendant la translation sur les derniers 10% de sa translation depuis la première position limite vers la deuxième position limite,
et dans lequel le rapport de la variation de la zone ouverte de l'ouverture en conséquence de la translation de l'élément de soupape à travers la première partie de l'ouverture sur la variation de la zone ouverte de l'ouverture en conséquence de la translation de l'élément de soupape à travers la deuxième partie de l'ouverture ne dépasse pas 0,5.

2. Système tel que revendiqué dans la revendication 1, dans lequel le premier élément de soupape (304) est fixe par rapport au conduit de purge (301) lorsque le système est en cours d'utilisation et le deuxième élément de soupape (312) est capable de se déplacer par rapport au premier élément de soupape sous l'action du mécanisme d'entraînement (318, 320, 325).

3. Système tel que revendiqué dans la revendication 1 ou 2, dans lequel le premier élément de soupape (304) est fourni par un arbre tubulaire ayant une paroi, l'ouverture (350) étant dans la paroi de l'arbre.

4. Système tel que revendiqué dans la revendication 3, dans lequel l'arbre a une deuxième ouverture (352) dans sa paroi sur le côté opposé de l'arbre à partir de la première ouverture (350) de sorte que le fluide s'écoulant le long du conduit de purge (301) doive s'écouler à travers l'une des ouvertures dans l'arbre et en dehors de l'arbre à travers l'autre ouverture ; éventuellement dans lequel la forme de la première ouverture est identique à la forme de la deuxième ouverture.

5. Système tel que revendiqué dans l'une ou l'autre des revendications 3 et 4, dans lequel le deuxième élément de soupape (312) coulisse par rapport à la paroi de l'arbre.

6. Système tel que revendiqué dans la revendication 5, dans lequel le deuxième élément de soupape (312) est configuré comme étant un piston, et le mouvement relatif des premier (304) et deuxième éléments de soupape implique le mouvement du piston à l'intérieur de l'arbre.

7. Système tel que revendiqué dans l'une quelconque des revendications 1 à 6, dans lequel le mécanisme d'entraînement (318, 320, 325) comprend des parties filetées mâle et femelle accouplées (318, 325) de sorte que la rotation d'une partie par rapport à l'autre partie amène l'un des éléments de soupape (304, 312) à coulisser par rapport à l'autre élément de soupape.

8. Système tel que revendiqué dans la revendication 7, dans lequel l'un des éléments de soupape (304, 312) comporte une partie qui a un filetage mâle et le mécanisme d'entraînement (318, 320, 325) comporte un support (325) ayant un alésage formé dans celui-ci qui est fileté à l'intérieur, dans lequel est reçue la partie filetée dudit élément de soupape.

9. Système tel que revendiqué dans la revendication 7 ou 8, dans lequel le mécanisme d'entraînement (318, 320, 325) a au moins un indice (328) qui indique la position de rotation de l'une des parties filetées (318, 325) par rapport à l'autre des parties filetées.

10. Système tel que revendiqué dans l'une quelconque des revendications 1 à 9, dans lequel le rapport de la largeur de l'ouverture au bord de celle-ci définie par le deuxième élément de soupape (312) lorsque le deuxième élément de soupape a effectué une translation sur 10% de la distance depuis la première position limite vers la deuxième position limite sur la largeur de l'ouverture au bord de celle-ci définie par le deuxième élément de soupape lorsque le deuxième élément de soupape a effectué une translation sur 90% de la distance depuis la première position limite vers la deuxième position limite ne dépasse pas 10%.

11. Système tel que revendiqué dans l'une quelconque des revendications 1 à 10, dans lequel le rapport de la largeur de l'ouverture définie par le deuxième élément de soupape (312) lorsque le deuxième élément de soupape a effectué une translation sur 10% de la distance depuis la première position limite vers la deuxième position limite sur la largeur de l'ouverture lorsque le deuxième élément de valve a effectué une translation sur 1% de la distance depuis la première position limite vers la deuxième position limite est au moins de 0,9.

12. Système tel que revendiqué dans l'une quelconque des revendications 1 à 11, dans lequel l'ouverture (350) comprend :
une partie de fente (354) ayant des côtés parallèles ; et/ou
une partie circulaire (356).

13. Système tel que revendiqué dans l'une quelconque des revendications 1 à 12, dans lequel l'ouverture (350) est en forme de trou de serrure.

14. Système tel que revendiqué dans l'une quelconque des revendications 1 à 13, dans lequel la largeur de la première partie de l'ouverture (350) mesurée perpendiculairement à l'axe le long duquel les éléments de soupape (304, 312) se déplacent l'un par rapport à l'autre est constante sur au moins 80% de la longueur de la première partie.

15. Système tel que revendiqué dans l'une quelconque des revendications 1 à 14, dans lequel l'ouverture (350) comporte une partie principale (356) à travers laquelle l'élément de soupape effectue une translation vers la deuxième position limite après translation à travers la première partie (354), et dans lequel la largeur de la partie principale augmente progressivement en allant vers la deuxième position limite de l'élément de soupape ; éventuellement dans lequel la partie principale de la première ouverture est définie par le contour de partie d'un cercle.
